# EUROPÄISCHE PATENTSCHRIFT

(11) **EP 1 307 732 B1**
(45) Veröffentlichungstag und Bekanntmachung des Hinweises auf die Patenterteilung: **14.12.2005**
(21) Anmeldenummer: 01960454.5
(22) Anmeldetag: 04.07.2001
(51) Int. Cl.: G01N 27/28, G01N 27/07, G01N 27/30, F16K 1/34

(54) **AUS ELEKTRISCH LEITFÄHIGEM KUNSTSTOFF BESTEHENDE, IN EINEN AUS ISOLIERENDEM KUNSTSTOFF BESTEHENDEN VENTILSITZ DICHT EINGEBETTETE ELEKTRODE**
ELECTRODE MADE OF ELECTRICALLY CONDUCTIVE PLASTIC, EMBEDDED IN A SEALED MANNER IN A VALVE SEAT MADE OF INSULATING PLASTIC
ELECTRODE EN PLASTIQUE ELECTRO-CONDUCTEUR, ENCASTREE DE MANIERE ETANCHE DANS UN SIEGE DE SOUPAPE EN PLASTIQUE ISOLANT

(30) Priorität: 28.07.2000 DE 20013142 U; 21.09.2000 DE 20016352 U
(43) Veröffentlichungstag der Anmeldung: 07.05.2003
(73) Patentinhaber: Xomox International GmbH & Co., 88131 Lindau (DE)
(72) Erfinder: GONSIOR, Wolfgang, D-88131 Bodolz (DE)
(74) Vertreter: Schmitt, Meinrad
(86) Internationale Anmeldenummer: PCT/EP2001/007620
(87) Internationale Veröffentlichungsnummer: WO 2002/010733

(56) Entgegenhaltungen:
- EP-A- 0 863 338
- DE-A- 2 950 039
- DE-A- 3 642 836
- DE-U- 20 016 352
- GB-A- 2 072 853
- US-A- 4 388 834
- US-A- 5 380 422
- US-A- 5 865 971
- US-A- 5 925 830
- US-A- 6 015 522

## Beschreibung

Die Erfindung bezieht sich auf eine Vorrichtung gemäss der in den ersten zehn Zeslen des Patentanspruchs 1 angegebenen Merkmale.

Eine derartige Vorrichtung ist aus der US 4 388 834 A und ebenso aus der DE 29 50 039 A sowie der US 5 925 830 A bekannt. Diese Vorrichtungen sind als elektromagnetische Durchflußmeßgeräte ausgebildet und enthalten in diametral angeordneten Ausnehmungen des als Rohr ausgebildeten Gehäuses zwei Elektroden, welche mit dem isolierenden Kunststoff einer innenliegenden Auskleidung oder des gesamten Rohres dicht verbunden sind. Die Elektroden bestehen aus elektrisch leitendem Kunststoff und sind abgesehen von der freien Oberfläche, welche mit dem durch das Rohr strömende Medium in Berührung steht, in den isolierenden Kunststoff eingeschlossen. Die jeweilige Elektrode erstreckt sich über die gesamte Wanddicke des Gehäuses bzw. Rohres radial von innen nach außen und ist in einem radial außenliegenden Bereich mit einem elektrischen Leiter, der als Draht oder Stift ausgebildet ist, elektrisch leitend verbunden. Gemäß der DE 29 50 039 A ist an dem elektrischen Leiter noch ein Metalinetz angeschlossen und es ist ferner eine dielektrische Isolierschicht vorgesehen.

Aus der DE 198 45 318 C ist eine Vorrichtung bekannt, welche als ein elektrochemischer Sauerstoffsensor ausgebildet ist und eine Messelektrode sowie eine Luft-Sauerstoffelektrode enthält. Die Messelektrode besteht aus einer gaspermeablen, polymeren, perfluorierten Diffusionsmembran, welche zumindest partiell einseitig mit einem Gemisch aus einem Edelmetall und PTFE (Polytetrafluorethylen) beschichtet ist. Die Diffusionsmembam ist der Umgebungsatmosphäre ausgesetzt und zusammen mit den genannten Elektroden und einem Elektrolythen in einem Sensorgehäuse angeordnet, welches aus porösem PTFE besteht, um einen Sauerstoffaustausch und einen lageunabhängigen Druckausgleich zu ermöglichen. Die Messelektrode und die Diffusionsmembran sind kreisflächig ausgebildet und weisen einen Aussendurchmesser in der Grössenordnung von 2 bis 50 mm auf. Da in einem solchen Sauerstoffsensor der Sauerstoff in das Innere des Gehäuses zu den dort angeordneten Elektroden durch die gaspermeable Diffusionsmembarn sowie das poröse Gehäuse gelangen muss, sind die Einsatzmöglichkeiten beschränkt, wobei ein Einsatz für aggressive und/oder unter Druck stehende Fluide oder Medien nicht ohne weiteres möglich ist.

Die EP 863339 offenbart ein Bodenventil eines Behälters mit einem als Dichtung und Ventilsitz verwendeten, aus elektrisch isolierendem Kunststoff bestehenden Gehäuse, das einen Stützkörper und einen Flansch mit zylindrischer Aussenfläche aufweist.

Die Herstellverfahren von chemischen, biochemischen, pharmazeutischen Produkten, Lebensmittel-Produkten oder dergleichen reagieren immer empfindlicher auf Veränderungen der Produktionsbedingungen, so dass eine hohe Präzision während der Herstellung erforderlich ist. Mit zunehmender Automation der Herstellverfahren werden zahlreiche informationen zur Erfassung der Eigenschaften der oftmals aggressiven Fluide oder Medien und der Verfahrensbedingungen benötigt, wobei hier vor allem auf den Druck, die Temperatur und den Zustand des Fluids oder Mediums verwiesen sei. Zur Erfassung derartiger Informationen gelangen Elektroden zum Einsatz, welche oftmals direkt im Bereich des Fluids oder Mediums angeordnet werden und mit diesen in Berührung gelangen. Zur Verwendung der Elektroden und zur Weiterleitung der erfassten Informationen an zugeordnete elektrische oder elektronische Auswerteeinrichtungen dienen elektrische Leiter, welche aus dem das Fluid oder Medium enthaltenden Bereich nach aussen geführt bzw. durch die jeweiligen Maschinen- oder Anlagenteile hindurchgeführt werden müssen.

Hiervon ausgehend liegt der Erfindung die Aufgabe zugrunde, eine Vorrichtung der genannten Art weiterzubilden.

Diese Aufgabe wird gemäss der im Patentanspruch 1 angegebenen Merkmale gelöst.

Die erfindungsgemässe Vorrichtung enthält wenigstens eine Elektrode, welche aus einem elektrisch leitenden Kunststoff, insbesondere fluorierten Kunststoff mit eingelagerten elektrisch leitfähigen Partikeln oder Teilchen, besteht und welche an einem Ende eines elektrischen Leiters angeordnet ist. Die Elektrode ist mit dem Leiter gemeinsam in ein Isolierendes Gehäuse oder einen Körper eingebettet, welcher zumindest in dem Bereich der Elektrode aus einem isolierenden Kunststoff besteht, insbesondere aus jungfräulichem PTFE. Die Elektrode ist jedoch im Bereich einer mit dem Fluid oder Medium in Berührung gelangenden Oberfläche frei vom isolierenden Kunststoff des Gehäuses oder des die Elektrode im übrigen umhüllenden Gehäusebereiches. Der elektrische Leiter besteht bevorzugt aus Metall und ist nicht durch das Gehäuse bzw. die Gehäusewand hindurchgeführt, sondern nur ein Ende des Leiters ist aus dem Gehäuse herausgeführt, und im übrigen ist der Leiter mit der am anderen Ende angeordneten Elektrode in das Gehäuse integriert. Alternativ besteht der elektrische Leiter aus elektrisch leitendem Kunststoff und ist einteilig mit der Elektrode ausgebildet. Das Gehäuse mit integrierter Elektrode und Leiter bildet ein kompaktes Bauelement, welches in bevorzugter Weise Bestandteil eines Gerätes ist, wie insbesondere eines Ventils. Der genannte, elektrisch nicht leitende Kunststoff des Gehäuses ist mit der Elektrode, insbesondere durch Schmelzen oder Schweissen, dicht verbunden, bevorzugt flüssigkeitsdicht und / oder gasdicht und / oder druckdicht, wobei die Elektrode eine mit dem Fluid oder Medium in Berührung gelangende freie Oberfläche aufweist und der genannte elektrische Leiter durch das Gehäuse hindurch nach aussen geführt ist, um dort den elektrischen Anschluss mit Messeinrichtungen oder dergleichen zu ermöglichen.

Erfindungsgemäss ist der elektrische Leiter als Tragkörper der Elektrode ausgebildet und bei der Fertigung in dem die Elektrode und den Leiter zumindest teilweise einschliessenden Gehäuse, insbesondere durch Formspritzen, Pressen oder Giessen, zusammen mit der Elektrode in der geforderten Weise positioniert. In bevorzugter Weise ist dem elektrischen Leiter zur Positionierung im Gehäuse wenigstens ein Tragelement zugeordnet. Das Tragelement besteht bevorzugt gleichfalls aus einem elektrisch nicht leitenden Kunststoff, vorzugsweise aus dem gleichen oder ähnlichen Kunststoff des Gehäuses. Bei der Herstellung der Vorrichtung wird der elektrische Leiter, an dessen innerem Ende die Elektrode angeordnet ist, mittels des oder der Tragelemente in dem Formgebungswerkzeug, insbesondere einer Spritzform oder einer Giessform, positioniert, wobei in einem nachfolgenden Verfahrensschritt der das Gehäuse bildende Kunststoff in das genannte Werkzeug eingebracht und insbesondere eingespritzt oder gegossen wird. Der derart in den Hohlraum des Formgebungswerkzeugs eingebrachte Kunststoff geht mit dem elektrisch leitenden Kunststoff der Elektrode eine innige dichte Verbindung ein, insbesondere durch Schmelzen oder Schweissen. Hierbei entsteht eine molekulare Grenzschicht oder Fügezone, in welcher Moleküle des Kunststoffs des Gehäuses und der Elektrode ineinandergreifen und / oder verketten, wodurch eine integrale Einheit zwischen der Elektrode und dem Gehäuse oder das die Elektrode umhüllenden Gehäusebereiches erzeugt ist. Des weiteren enthält in vorteilhafter Weise das Gehäuse oder der Körper einen vom Kunststoff zumindest näherungsweise vollständig umschlossenen Stützkörper, welcher zur Stabilisierung und Aussteifung der Vorrichtung dient. Wird die Vorrichtung als Ringkörper ausgebildet, so ist der im Inneren des Gehäuses angeordnete und in den Kunststoff desselben eingegossene Stützkörper in vorteilhafter Weise als eine Buchse und / oder gleichfalls als Ringkörper ausgebildet.

Die Elektrode ist in einer bevorzugten Ausgestaltung der Erfindung mittels eines Verfahrens gefertigt, wobei das zunächst als Pulver vorliegende Elektroden-Material auf das genannte innere Ende des elektrischen, insbesondere aus Metall bestehenden Leiters aufgepresst und hierbei zu einem festen Körper verpresst wird, wobei die derart vorgefertigte Elektrode das innere Ende des elektrischen Leiters bevorzugt umschliesst. Der elektrische Leiter ist an dem genannten Ende in bevorzugter Weise perforiert, so dass das Elektrodenmaterial durch die Perforationen durchgreift und in vorteilhafter Weise somit die Wärmeübertragung und / oder die Festigkeit der Verbindung zwischen der Elektrode und dem elektrischen Leiter optimiert ist. In einem weiteren Verfahrensschritt wird die Elektrode samt Leiter in den Kunststoff des Gehäuses eingebettet, und zwar insbesondere durch ein Giessverfahren oder Spritzverfahren mittels eines Formgebungswerkzeuges, in dessen für den Kunststoff des Gehäuses vorgesehenen Hohlraum die Elektrode inklusive Leiter positioniert wird. Hierzu gelangt in vorteilhafter Weise wenigstens ein Tragelement zum Einsatz, welches zur Halterung und Positionierung insbesondere des elektrischen Leiters ausgebildet ist. Des weiteren kann in vorteilhafter Weise in den Hohlraum des Formgebungswerkzeugs ein Stützkörper angeordnet werden, welcher beim Einbringen des Kunststoffes in das Formgebungswerkzeug ebenso wie die Elektrode und der elektrische Leiter vollständig vom Kunststoff umgeben wird, wobei lediglich das eine freie Ende des elektrischen Leiters herausgeführt ist, also nicht vom Kunststoff des Gehäuses umgeben wird.

Die Vorrichtung ist als kompaktes Bauelement bevorzugt in ein Bauteil oder Gerät integriert, wobei hier vor allem auf Ventile, Flanschverbindungen oder ähnliches verwiesen sei. In besonders vorteilhafter Weise ist die Vorrichtung Bestandteil eines Ventilsitzes, so dass zur Erfassung der erforderlichen Informationen und / oder Prozessdaten des Herstellverfahrens praktisch kein zusätzlicher apparativer Aufwand erforderlich ist. So ist in besonders zweckmässiger Weise die erfindungsgemässe Vorrichtung oder das Bauelement, insbesondere in ein Bodenventil eines Behälters oder Reaktors integriert, in welchem das verwendete Fluid oder Medium nach den unterschiedlichsten Verfahren verarbeitet wird. Derartige Reaktoren, Ventile oder sonstige Baugruppen sind oftmals mit einer Kunststoffauskleidung versehen, insbesondere aus fluorierten Kunststoffen, wie insbesondere PTFE (Polytetrafluoräthylen), FEP (Fluoräthylenpropylen), PFA (Perfluoralkoxy), PVDF, PTFES, FEPS oder vergleichbaren Kunststoffen. Bevorzugt bestehen aus oder enthalten die Elektrode und / oder das die Elektrode und das den elektrischen Leiter umhüllende Gehäuse derartige insbesondere fluorierte Kunststoffe.

Die Erfindung wird nachfolgend anhand der in der Zeichnung dargestellten Ausführungsbeispiele näher erläutert, ohne dass insoweit eine Beschränkung erfolgt. Es zeigen:
- Fig. 1: eine perspektivische Darstellung der als Ventilsitz ausgebildeten Vor- richtung,
- Fig. 2: eine Ansicht ähnlich Fig. 1, wobei das Gehäuse teilweise durchsichtig dargestellt ist,
- Fig. 3: vergrössert das Detail III gemäss Fig. 2,
- Fig. 4: die Elektrode samt elektrischem Leiter,
- Fig. 5: schematisch eine Vorrichtung zur Herstellung der Elektrode und deren gleichzeitige Verbindung mit dem elektrischen Leiter,
- Fig. 6: schematisch einen axialen Schnitt durch ein Ventil mit der als Ventilsitz ausgebildeten Vorrichtung.

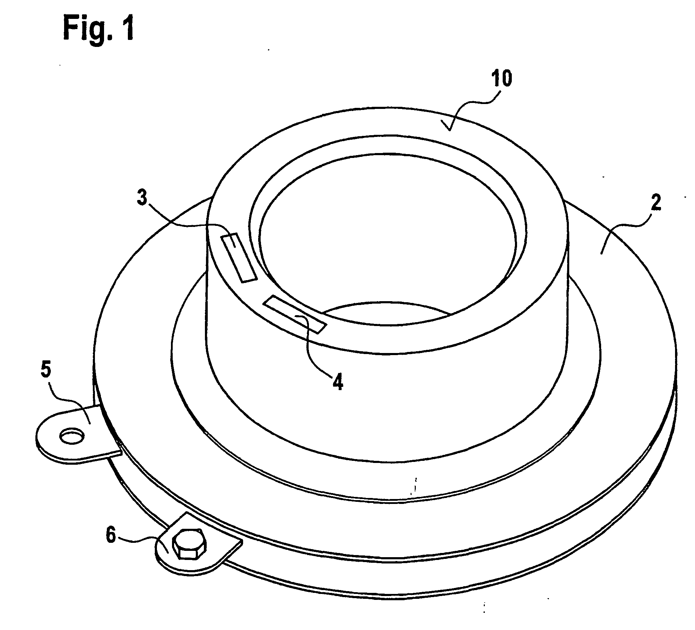

Fig. 1 zeigt die erfindungsgemässe Vorrichtung, welche ein Gehäuse oder Körper 2 aus Kunststoff aufweist, insbesondere aus fluoriertem Kunststoff, wie PTFE, FEP, PFA, PTFES, FEPS oder PVDF. In den genannten Kunststoff bzw. das Gehäuse oder den Körper 2 sind zwei Elektroden 3, 4 ebenso wie mit diesen elektrisch verbundene elektrische Leiter 5, 6 eingebettet, die insbesondere aus Metall bestehen und deren Enden aus dem Gehäuse 2 herausgeführt sind, um den elektrischen Anschluss an eine geeignete Auswerteeinrichtung oder dergleichen zu ermöglichen. Von den beiden Elektroden 3, 4 sind nur die dem zu sensierenden Medium oder Fluid zugewandten Oberflächen zu erkennen, welche.frei vom isolierenden Kunststoff des Gehäuses sind. Die Vorrichtung ist erfindungsgemäss als Ventilsitz eines hier nicht weiter dargestellten Ventils ausgebildet.

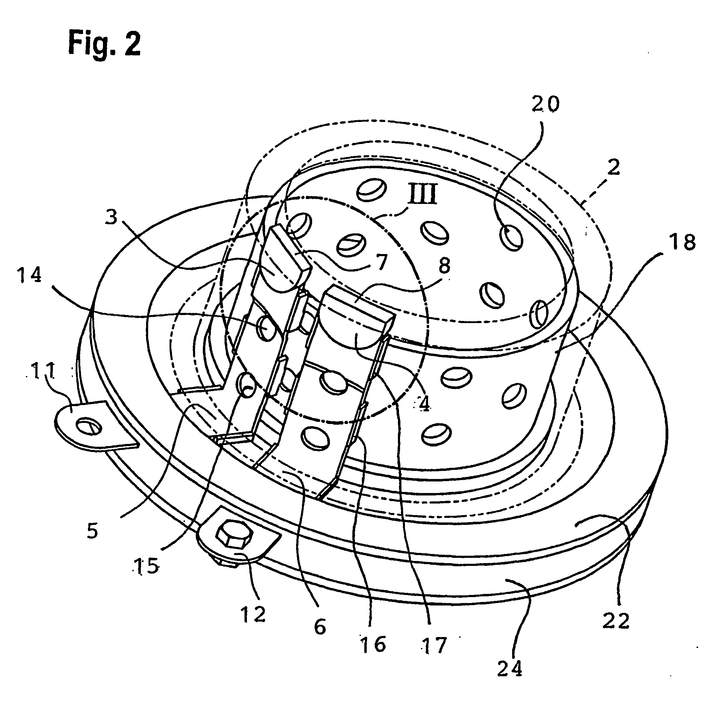

Fig. 2 zeigt eine Ansicht der Vorrichtung, wobei das Gehäuse teilweise durchscheinend dargestellt ist und somit die vom dichten Kunststoff des Gehäuses praktisch vollständig umschlossenen elektrischen Leiter 5, 6 ebenso wie die Elektroden 3, 4 gut zu erkennen sind. Die Elektroden 3, 4 umschliessen die innenliegenden Enden der elektrischen Leiter 5, 6 und sind mit diesen fest und elektrisch leitend verbunden. Die aus elektrisch leitendem Kunststoff bestehenden oder solchen zumindest teilweise aufweisenden Elektroden 3, 4 enthalten bevorzugt elektrisch leitende Partikel oder Teilchen, welche einen Stromfluss durch die Elektroden 3, 4 und die angeschlossenen elektrischen Leiter 5, 6 ermöglichen. Die Elektroden 3, 4 sind druckdicht und / oder flüssigkeitsdicht in den Kunststoff des Gehäuses 2 eingebettet und insbesondere durch Schmelzen und / oder Schweissen verbunden. Diese Verbindung wird in bevorzugter Weise bei der Fertigung des Gehäuses mit einem geeigneten Formgebungswerkzeug hergestellt, insbesondere durch Kunststofformspritzen, Pressen oder Giessen, wobei die Elektroden 3, 4 und die elektrischen Leiter 5, 6 von dem Kunststoff des dichten Gehäuses umhüllt werden und in den Grenzflächen der Elektrode und des Gehäuses die Kunststoffe ineinander verschmelzen und / oder verschweissen.

Die freien Oberflächen 7, 8 der beiden Elektroden 3, 4 liegen in einer Ringfläche 10 der Vorrichtung bzw. des Ventilsitzes und sind erfindungsgemäss in Umfangsrichtung nebeneinander mit einem vorgegebenen Abstand angeordnet. In vorteilhafter Weise können gemeinsam mit der Bearbeitung der Ringfläche 10 die freien Oberflächen 7, 8 bearbeitet werden. Die Ringfläche 10 gelangt mit dem zu sensierenden Fluid bzw. Medium in Kontakt und somit auch die beiden freien Oberflächen 7, 8 und infolge dessen kann zwischen den beiden Elektroden entsprechend den Eigenschaften des Fluids oder Mediums ein elektrischer Strom fliessen, so dass ein elektrisches Signal an den herausgeführten freien Enden 11, 12 der elektrischen Leiter abgegriffen werden kann. Die Verbindung der Elektrode mit dem umgebenden Gehäusebereich ist bevorzugt druckdicht derart ausgebildet, dass Druckdifferenzen zwischen einem den Oberflächen 7,8 zugeordneten Innenraum eines Gerätes, wie insbesondere eines Ventils, und einem die freien Enden 11,12 enthaltenden Aussenraum nicht zu Leckagen führen. Die elektrischen Leiter 5, 6 enthalten Ausnehmungen oder Durchbrechungen 14, 15 zur optimlerten Verankerung im Kunststoff des umgebenden Gehäuses 2.

Den elektrischen Leitern 5, 6 sind ferner Tragelemente 16, 17 zugeordnet, welche in besonders vorteilhafter Weise zur Positionierung der elektrischen Leiter 5, 6 in der kompletten Vorrichtung und / oder in einem Formgebungswerkzeug, insbesondere einer Spritzform oder Glessform ausgebildet sind. Die Tragelemente 16, 17 bestehen In bevorzugter Weise aus jungfräulichen PTFE oder aus einem gleichen oder ähnlichen Kunststoff wie der des Gehäuses, so dass eine integrale Verbindung nach der Herstellung der Vorrichtung und dauerhaft eine exakte Positionierung gewährleistet ist. Die Tragelemente 16, 17 sind teilweise an die Aussenkontur der elektrischen Leiter 5, 6 angepasst, um nach Art einer Clips- oder Steckverbindung die Positionierung im Formgebungswerkzeug und / oder dem Gehäuse zu gewährleisten. Ferner enthält die Vorrichtung in vorteilhafter Weise einen Stützkörper 18, welcher zumindest näherungsweise, bevorzugt vollständig in den Kunststoff des Gehäuses 2 eingebettet ist. Bei der dargestellten, bevorzugt ringförmigen Ausbildung der Vorrichtung, ist der Stützkörper 18 Im wesentlichen als ein Ringkörper ausgebildet. Der Stützkörper 18 besteht aus einem im Vergleich zum Kunststoff des Gehäuses erheblich stabileren und / oder steiferen Material, insbesondere aus Metall. Des weiteren enthält der bevorzugt als Ringkörper oder Buchse ausgebildete Stützkörper 18 Ausnehmungen oder Durchbrechungen 20. Die Tragelemente 16, 17 greifen mit korrespondierend ausgebildeten Ansätzen in die genannten Ausnehmungen 20 ein, wodurch in bevorzugter Weise eine exakte Positionierung der elektrischen Leiter 5, 6 und somit der Elektroden 3, 4 in dem Formgebungswerkzeug und letztendlich im Gehäuse 2 sicher gestellt ist.

Ferner besitzt bei erfindungsgemässen Vorrichtung das Gehäuse einen Flansch 22, welcher in vorteilhafter Weise zur Montage und Festlegung der Vorrichtung bevorzugt zwischen Flanschen von zugeordneten Maschinen- oder Anlagenteilen, insbesondere eines Ventils, ausgebildet ist. Die freien Enden 11, 12 der Leiter 5, 6 sind an der insbesondere zylindrischen Aussenfläche 24 des Flansches 22 herausgeführt. Wird der. Flansch 22 zwischen zwei Flanschen der zugeordneten Maschinen- oder Anlageteilen angeordnet, so können an den derart herausgeführten freien Enden 11, 12 problemlos elektrische Leitungen zur Verbindung mit einer Auswerteeinrichtung oder dergleichen angeschlossen werden.

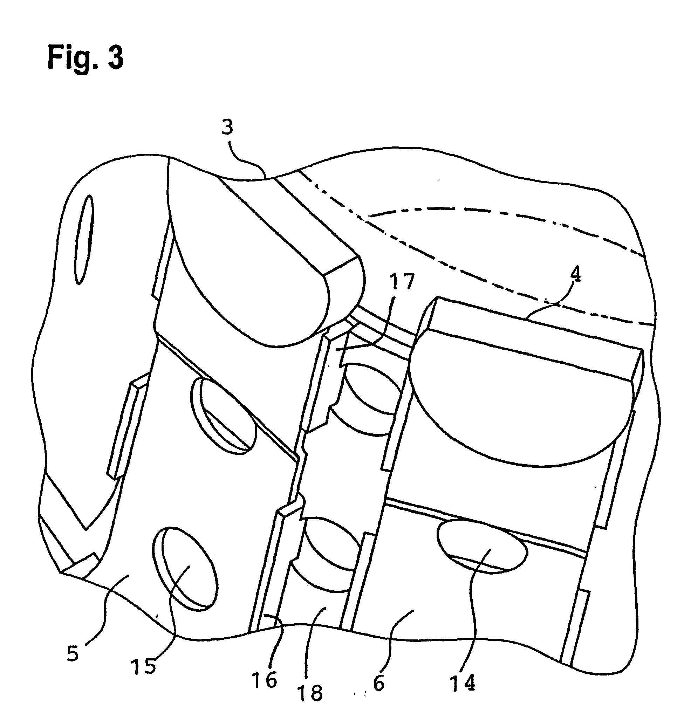

Fig. 3 zeigt vergrössert im Detail die beiden Elektroden 3, 4 und teilweise die elektrischen Leiter 5, 6. Die elektrischen Leiter 5, 6 enthalten in vorteilhafter Weise Ausnehmungen in Form von Durchbrechungen 14, 15, welche vom Kunststoff des Gehäuses ausgefüllt sind, wodurch eine feste und stabile Verankerung gewährleistet ist. Des weiteren sind die Tragelemente 16, 17 und der ringförmige Stützkörper 18 gut zu erkennen.

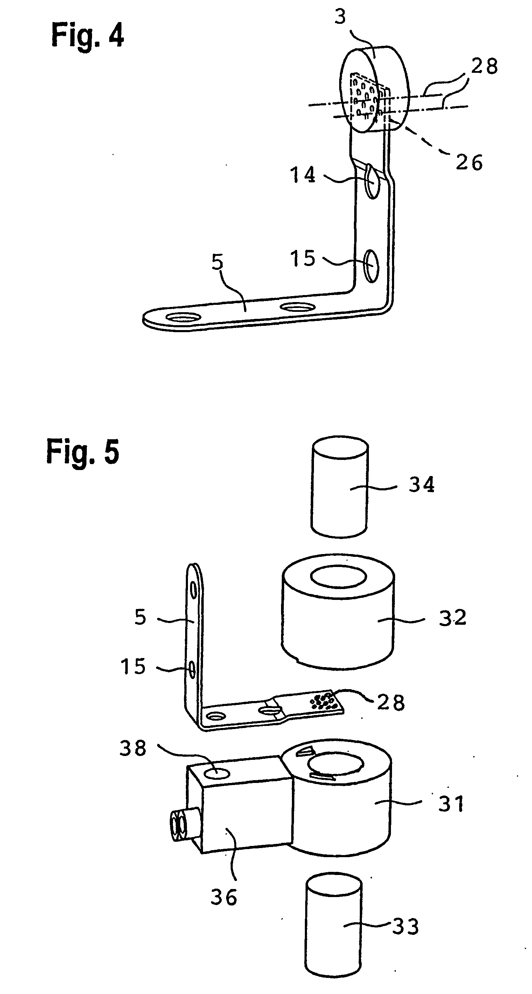

Fig. 4 zeigt die Elektrode 3 aus fluoriertem Kunststoff, in welchem elektrisch leitende Partikel eingebettet sind. Wie ersichtlich, umschliesst die Elektrode das eine Ende des elektrischen Leiters 5 und ist fest mit diesem verbunden. In zweckmässiger Weise ist das innere Ende 26 des Leiters 5 im Bereich der Elektrode 3 perforiert, wie es mit den strichpunktierten Linien 28 angedeutet ist. Der Kunststoff der Elektrode 3 durchdringt diese Perforationen 28, wodurch nicht nur eine stabile und feste Verbindung gewährleistet ist, sondern die Wärmeübertragung ebenso wie die elektrische Leitfähigkeit zwischen der Elektrode 3 und dem elektrischen Leiter 5 erheblich verbessert sind.

Das Verfahren und die hierzu zum Einsatz gelangende Vorrichtung zur Herstellung der Elektrode und deren gleichzeitiges Verbinden mit dem elektrischen Leiter 5 werden nachfolgend erläutert. Die Vorrichtung enthält zwei Zylinder 31, 32, in welche zwei Kolben 33, 34 einführbar sind. Nach dem teilweise Einführen des gemäss Zeichnung unteren Kolbens 33 in den Zylinder 31 wird der pulverförmige Kunststoff für die Elektrode in den oberen Freiraum eingefüllt und die Elektrode in der dargestellten Weise oben auf dem Zylinder 31 aufgelegt, wobei auch über das genannte Ende des elektrischen Leiters 5 das Kunststoffpulver aufgebracht wird. Der untere Zylinder 31 ist an einer Tragvorrichtung 36 angeordnet, welche ein Fixierelement für die Elektrode 5 aufweist, wobei das Fixierelement 38 in die Ausnehmung 15 des elektrischen Leiters 5 eingreift.

Nachfolgend werden die beiden Zylinder 31, 32 ebenso wie die beiden Kolben 33, 34 zusammengefahren. Die Kolben 33, 34 sind Bestandteil einer Pressvorrichtung, welche mit hohem Druck das Kunststoffpulver einschliesslich der elektrisch leitfähigen Partikel oder Teilchen zu der dichten und festen Elektrode verpresst. Beim Verpressen wird in vorteilhafter Weise ferner Wärme zugeführt, beispielsweise über eine in den Zylinder 31 integrierte, hier nicht weiter dargestellte elektrische Heizeinrichtung. In Folge der Erwärmung auf eine vorgebbare Temperatur wird der zunächst pulverförmige Kunststoff plastifiziert, so dass letztendlich eine kompakte und integral mit dem bevorzugt aus Metall bestehenden elektrischen Leiter 5 verbundene Elektrode hergestellt ist.

In einer alternativen Ausgestaltung besteht der elektrische Leiter ebenso wie die Elektrode aus elektrisch leitendem Kunststoff. Hierbei kann der elektrische Leiter analog zu den obigen Ausführungen mit der Elektrode verbunden sein und eine integrale Einheit bilden. Ferner können in einer bevorzugten Weiterbildung der elektrische Leiter und die Elektrode einteilig ausgebildet und gemeinsam in einem einheitlichen Verfahren, insbesondere Preßverfahren hergestellt sein, und zwar analog zu dem oben erläuterten Herstellverfahren der Elektrode aus pulverförmigem, elektrisch leitfähigem Kunststoff. Bei dieser Ausführungsform sind die oben erläuterten Tragelemente und/oder der Stützkörper von besonderer Bedeutung, zumal für den Fall, dass der elektrisch leitende Kunststoff eine zu geringe Steifigkeit und Eigenstabilität aufweist. Mittels der Tragelemente und/oder des Stützkörpers wird vor allem bei der Herstellung eine sichere Positionierung des elektrischen Leiters mit der einteilig angeformten Elektrode gewährleistet.

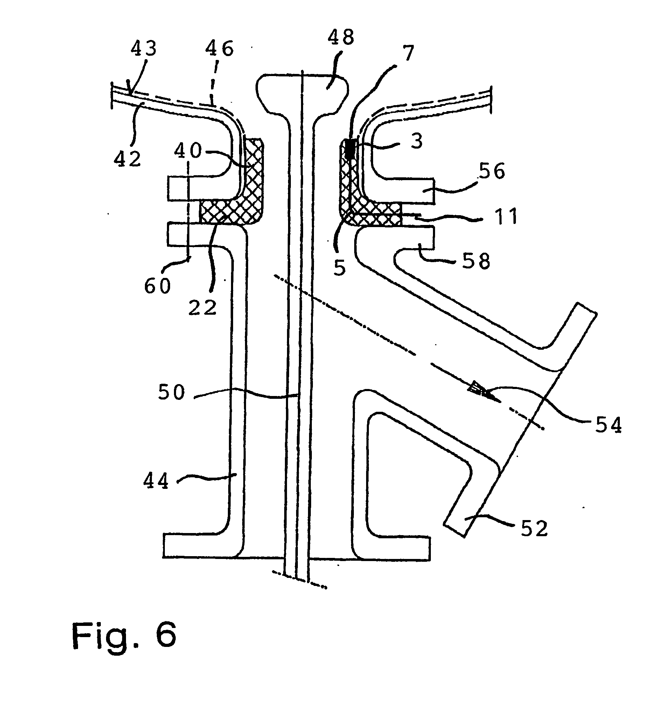

Fig. 6 zeigt schematisch in einem axialen Schnitt eine bevorzugte Ausgestaltung der Vorrichtung als Ventilsitz oder Sitzring 40. Das Ventil ist als Bodenablassventil eines Behälters oder Reaktors 42 ausgebildet, der hier nur teilweise angedeutet ist und dessen Innenfläche 43 mit einer durch gestrichelte Linien angedeuteten Auskleidung 46 aus Kunststoff versehen ist. Das Ventil enthält einen Ventilkörper 48, welcher in bekannter Weise in Richtung einer Achse 50 axial bewegbar ist. Der Ventilkörper 48 ist in der Offen-Position dargestellt, so dass ein im Behälter befindliches Medium oder Fluid durch einen Auslauf 52 in Richtung des Pfeiles 54 ausströmen kann. Am unteren Ende des Ventilgehäuses 44 ist in bekannter Weise eine hier nicht dargestellte Einrichtung oder ein Antrieb zur axialen Bewegung des Ventilkörpers 48 angeordnet, um bedarfsweise den Ventilkörper 48 aus der dargestellten Offen-Position nach unten in die Verschluss-Position zu bringen, in welcher der Ventilkörper 48 dicht am Ventilsitz 40 anliegt. Der Behälter 42 besitzt unten einen Flansch 56, mit welchem ein Flansch 58 des Ventilgehäuses 44 verbunden ist, insbesondere mittels Schrauben gemäss der strichpunktierten Linie 60. Zwischen den genannten Flanschen 56 und 58 ist der Flansch 22 des Ventilsitzes 40 angeordnet und dicht eingespannt. Die freie Oberfläche 7 der Elektrode 3 ist dem Innenraum des Behälters 42 zugeordnet, so dass das im Behälter gespeicherte Medium problemlos erfasst und sensiert werden kann. Das freie Ende 11 des elektrischen Leiters 5 ragt radial nach aussen in den Ringraum zwischen den beiden Flanschen 56 und 58, so dass problemlos eine elektrische Leitung zu einer Auswerteeinrichtung oder dergleichen dort angeschlossen werden kann.

### Bezugszeichen

- 2: Gehäuse / Körper
- 3, 4: Elektrode
- 5, 6: elektrische Leiter
- 7, 8: freie Oberfläche von 3, 4
- 10: Fläche / Ringfläche
- 11, 12: freies Ende von 5, 6
- 14, 15: Ausnehmung / Durchbrechung in 5, 6
- 16, 17: Tragelement
- 18: Stützkörper
- 20: Ausnehmungen / Durchbrechung in 18
- 22: Flansch von 2
- 24: Aussenfläche von 22
- 26: perforiertes Ende von 5
- 28: strichpunktierte Linie / Perforation in 5, 6
- 31, 32: Zylinder
- 33, 34: Kolben
- 36: Tragvorrichtung
- 38: Fixierelement
- 40: Ventilsitz / Sitzring
- 42: Behälter / Reaktor
- 43: Innenfläche von 42
- 44: Ventilgehäuse
- 46: Auskleidung
- 48: Ventilkörper
- 50: Achse
- 52: Auslauf
- 54: Pfeil
- 56: Flansch von 42
- 58: Flansch von 44
- 60: strichpunktierte Linie / Schraube

## Patentansprüche

1. Vorrichtung, insbesondere Sensor, enthaltend wenigstens eine mit einem elektrischen Leiter (5, 6) verbundene Elektrode (3, 4), welche aus elektrisch leitendem Kunststoff gebildet ist und an einem Ende des elektrischen Leiters (5, 6) angeordnet ist und im wesentlichen von einem isolierenden Gehäuse (2) umschlossen ist, wobei die Elektrode (3, 4) eine mit einem insbesondere aggressiven Fluid oder Medium in Berührung gelangende Oberfläche (7, 8) aufweist, wobei ferner ein anderes freies Ende (11, 12) des Leiters (5, 6) aus der Vorrichtung herausgeführt ist, und wobei das Gehäuse (2) zumindest im Bereich der Elektrode (3, 4) aus elektrisch isolierendem Kunststoff besteht oder isolierenden Kunststoff aufweist, welcher mit der Elektrode (3, 4) dicht verbunden ist und in welchen die Elektrode (3, 4), abgesehen von der freien Oberfläche (7, 8) eingeschlossen ist,
wobei, der elektrische Leiter (5, 6) ebenso wie die Elektrode (5, 6) vom isolierenden Gehäuse (2) umschlossen und in dieses eingebettet ist und ferner mit dem freien Ende (11, 12) aus diesem herausgeführt ist,
wobei der elektrische Leiter (5, 6) als Tragkörper der Elektrode (3, 4) ausgebildet ist oder dem elektrischen Leiter (5, 6) ein Tragelement (16, 17) oder ein Stützkörper (18) zugeordnet ist,
und wobei das Gehäuse (2) einen Flansch (22) aufweist, durch welchen der elektrische Leiter (5, 6) hindurchgeführt ist, wobei dessen freies Ende (11, 12) an der insbesondere zylindrischen Außenfläche (24) des Flansches (22) aus diesem herausgeführt ist.

2. Vorrichtung nach Anspruch 1, **dadurch gekennzeichnet, dass** als Kunststoff der Elektrode (3, 4) und / oder des isolierenden Gehäuses (2) oder Gehäusebereiches ein dichter, insbesondere fluorierter Kunststoff vorgesehen ist und/oder dass der Kunststoff der Elektrode (3, 4) elektrisch leitfähige Partikel oder Teilchen enthält.

3. Vorrichtung nach Anspruch 1 oder 2, **dadurch gekennzeichnet, dass** die Elektrode (3, 4) und der elektrische Leiter (5, 6) bei der Herstellung des Gehäuses (2) in dieses integriert sind, wobei eine dichte und/oder integrale Verbindung zwischen dem Kunststoff der Elektrode (3, 4) und dem Kunststoff des Gehäuses (2) hergestellt ist, und/oder dass die Verbindung flüssigkeitsdicht und/oder gasdicht und/oder druckdicht ausgebildet ist.

4. Vorrichtung nach einem der Ansprüche 1 bis 3, **dadurch gekennzeichnet, dass** sie als Bauelement eines Gerätes, insbesondere als Ventilsitz (40) eines Ventils, ausgebildet ist.

5. Vorrichtung nach Anspruch 4, **dadurch gekennzeichnet, dass** die freie Oberfläche (7, 8) der Elektrode (3, 4) in einer Ringfläche (10) des Bauelements, insbesondere des Ventilsitzes (40), angeordnet ist.

6. Vorrichtung nach einem der Ansprüche 1 bis 5, **dadurch gekennzeichnet, dass** der elektrische Leiter (5, 6) im Bereich der Elektrode (3, 4) Perforationen (16) aufweist, welche vom Kunststoff der Elektrode (3, 4) ausgefüllt sind.

7. Vorrichtung nach einem der Ansprüche 1 bis 6, **dadurch gekennzeichnet, dass** der elektrische Leiter (5, 6) aus Metall oder elektrisch leitendem Kunststoff besteht und dass der elektrische Leiter (5, 6) und die Elektrode (3, 4) eine integrale oder einteilige Einheit bilden.

8. Vorrichtung nach einem der Ansprüche 1 bis 7, **dadurch gekennzeichnet, dass** das Tragelement (16, 17) aus einem elektrisch isolierenden Kunststoff besteht und/oder dass der Stützkörper (18) eine höhere Steifigkeit und/oder Festigkeit aufweist als der Kunststoff des Gehäuses (2).

9. Vorrichtung nach einem der Ansprüche 1 bis 8, **dadurch gekennzeichnet, dass** die Elektrode (3, 4) zumindest in dem unterhalb der Oberfläche (7, 8) liegenden Bereich Ober ihre gesamte Außenkontur von dem elektrisch nicht leitenden Kunststoff des Gehäuses umschlossen ist und/oder dass in der Grenzschicht zwischen der Elektrode (3, 4) und dem umgebenden isolierenden Kunststoff des Gehäuse (2) infolge von ineinandergreifenden Molekülen und/oder durch Schmelzen und/oder Schweissen eine dichte Verbindung vorhanden ist.

10. Vorrichtung nach einem der Ansprüche 1 bis 9, **dadurch gekennzeichnet, dass** die Oberfläche (7, 8) der Elektrode (3, 4) im wesentlichen in der gleichen Ebene liegt wie eine Fläche (10) des Gehäuses (2), wobei die Fläche (10) insbesondere als eine Ringfläche ausgebildet ist.

## Claims

1. A device, especially a sensor, including at least one electrode (3, 4) connected to an electric conductor (5, 6), which is formed from electrically conductive plastic and is arranged at one end of the electric conductor (5, 6) and is essentially surrounded by an insulating housing (2), wherein the electrode (3, 4) has a surface (7, 8) that particularly contacts an aggressive fluid or medium, wherein further another free end (11, 12) of the conductor (5, 6) leads out of the device, and wherein the housing (2) is made of electrically insulating plastic or includes insulating plastic at least in the area of the electrode (3, 4), which plastic is sealingly connected with the electrode (3, 4) and in which the electrode (3, 4) is enclosed except for the free surface (7, 8),
wherein
the electric conductor (5, 6) as well as the electrodes (5, 6) are surrounded by insulating housing (2) and is embedded therein and further protrudes therefrom with its free end (11, 12),
wherein
the electric conductor (5, 6) is conformed as a support element for the electrode (3, 4) or a bearing element (16, 17) or support body (18) is assigned to the electric conductor (5, 6),
and wherein the housing (2) has a flange (22) through which the electric conductor (5, 6) passes, wherein the free end (11, 12) thereof is guided out of this along the particularly cylindrical outer surface (24) of the flange (22).

2. The device as cited in claim 1,
**characterised in that**
a leak proof, particularly fluorinated plastic is provided as the plastic of the electrode (3, 4) and / or of the insulating housing (2) or housing area, and / or that the plastic of the electrode (3, 4) contains electrically conductive particles.

3. The device as cited in either of claims 1 or 2,
**characterised in that**
the electrode (3, 4) and the electric conductor (5, 6) are integrated in the housing (2) during production thereof, wherein a leak proof and/or integral connection between the plastic of the electrode (3, 4) and the plastic of the housing (2) is produced, and/or that the connection is impervious to liquids and/or gases and/or pressure.

4. The device as cited in any of claims 1 to 3,
**characterised in that**
it is formed as a component of a device, particularly as the valve seat of a valve (40).

5. The device as cited in claim 4,
**characterised in that**
the free surface (7, 8) of the electrode (3, 4) is arranged in an annular surface (10) of the component, particularly the valve seat (40).

6. The device as cited in any of claims 1 to 5,
**characterised in that**
the electric conductor (5, 6) has perforations (16) filled with the plastic of the electrode (3, 4) in the area of the electrode (3, 4).

7. The device as cited in any of claims 1 to 6,
**characterised in that**
the electric conductor (5, 6) is made from metal or electrically conductive plastic and that the electric conductor (5, 6) and the electrode (3, 4) form an integral or one-part unit.

8. The device as cited in any of claims 1 to 7,
**characterised in that**
the bearing element (16, 17) included an electrically insulating plastic and/or that the supporting body (18) has greater rigidity and/or resistance than the plastic of the housing (2).

9. The device as cited in any of claims 1 to 8,
**characterised in that**
at least in the area beneath the surface (7, 8), the electrode (3, 4) is surrounded over its entire outer contour by the electrically non-conductive plastic of the housing and/or that a leak- proof connection is present in the border layer between the electrode (3, 4) and the surrounding insulating plastic of the housing (2) as a result of interlaced molecules and/or through melting and/or welding.

10. The device as cited in any of claims 1 to 9,
**characterised in that**
the surface (7, 8) of the electrode (3, 4) essentially lies on the same plane as a surface (10) of the housing (2), wherein the surface (10) particularly has the form of an annular surface.

## Revendications

1. Dispositif, en particulier capteur, comprenant au moins une électrode (3, 4) reliée à un conducteur électrique (5, 6), qui est formée d'une matière plastique conductrice électrique et est placée à une extrémité du conducteur électrique (5, 6) et qui est entourée pour l'essentiel par un boîtier isolant (2), l'électrode (3, 4) présentant une surface (7, 8) entrant en contact avec un fluide ou milieu en particulier agressif, une autre extrémité libre (11, 12) du conducteur (5, 6) sortant de plus du dispositif, et le boîtier (2) étant constitué d'une matière plastique isolante électrique au moins au niveau de l'électrode (3, 4) ou présentant une matière plastique isolante qui est reliée hermétiquement à l'électrode (3, 4) et dans laquelle l'électrode (3, 4) est insérée à l'exception de la surface libre (7, 8),
dans lequel le conducteur électrique (5, 6) ainsi que l'électrode (3, 4) sont entourés par le boîtier isolant (2) et enrobés dans celui-ci et, de plus, sortent de celui-ci avec l'extrémité libre (11, 12),
le conducteur électrique (5, 6) étant conformé en corps porteur de l'électrode (3, 4), ou bien un élément porteur (16, 17) ou un corps de soutien (18) étant associé au conducteur électrique (5, 6),
et dans lequel le boîtier (2) présente une bride (22) à travers laquelle passe le conducteur électrique (5, 6), l'extrémité libre (11, 12) de celui-ci sortant de celle-ci au niveau de la surface extérieure (24) en particulier cylindrique de la bride (22).

2. Dispositif selon la revendication 1, ***caractérisé en ce que*****,** pour la matière plastique de l'électrode (3, 4) et/ou du boîtier isolant (2) ou de la partie de boîtier, il est prévu une matière plastique dense, en particulier fluorée, et/ou ***en ce que*** la matière plastique de l'électrode (3, 4) contient des particules conductrices.

3. Dispositif selon la revendication 1 ou 2, ***caractérisé en ce que*** l'électrode (3, 4) et le conducteur électrique (5, 6) sont intégrés dans le boîtier (2) lors de la fabrication de celui-ci, une liaison étanche et/ou intégrale étant établie entre la matière plastique de l'électrode (3, 4) et la matière plastique du boîtier (2), et/ou ***en ce que*** la liaison est réalisée étanche aux liquides et/ou aux gaz et/ou à la pression.

4. Dispositif selon l'une quelconque des revendications 1 à 3, ***caractérisé en ce qu'**il* est conformé en composant d'un appareil, en particulier en siège de vanne (40) d'une vanne.

5. Dispositif selon la revendication 4, ***caractérisé en ce que*** la surface libre (7, 8) de l'électrode (3, 4) est placée dans une surface annulaire (10) du composant, en particulier du siège (40) de vanne.

6. Dispositif selon l'une quelconque des revendications 1 à 5, ***caractérisé en ce que*** le conducteur électrique (5, 6) présente au niveau de l'électrode (3, 4) des perforations qui sont remplies par la matière plastique de l'électrode (3, 4).

7. Dispositif selon l'une quelconque des revendications 1 à 6, ***caractérisé en ce que*** le conducteur électrique (5, 6) est constitué de métal ou d'une matière plastique conductrice électrique et ***en ce que*** le conducteur électrique (5, 6) et l'électrode (3, 4) forment une unité intégrale ou solidaire.

8. Dispositif selon l'une quelconque des revendications 1 à 7, ***caractérisé en ce que*** l'élément porteur (16, 17) est composé d'une matière plastique isolante électrique et/ou ***en ce que*** le corps de soutien (18) présente une rigidité et/ou une résistance plus grande que la matière plastique du boîtier (2).

9. Dispositif selon l'une quelconque des revendications 1 à 8, ***caractérisé en ce qu'**au* moins dans la zone située au-dessus de la surface (7, 8), l'électrode (3, 4) est entourée sur tout son contour extérieur par la matière plastique non conductrice électrique du boîtier, et/ou ***en ce que*** dans la couche limite entre l'électrode (3, 4) et la matière plastique isolante du boîtier (2) l'entourant, une liaison hermétique est présente par suite de molécules imbriquées et/ou par fusion et/ou soudure.

10. Dispositif selon l'une quelconque des revendications 1 à 9, ***caractérisé en ce que*** la surface (7, 8) de l'électrode (3, 4) se trouve pour l'essentiel dans le même plan qu'une surface (10) du boîtier (2), la surface (10) étant conformée en particulier en surface annulaire.
